# EUROPEAN PATENT APPLICATION

(11) **EP 2 642 108 A1**
(43) Date of publication of application: **25.09.2013**
(21) Application number: 11841855.7
(22) Date of filing: 08.11.2011
(51) Int. Cl.: F02M 25/07, F02B 37/00, F02M 35/10

(54) **LOW-PRESSURE LOOP EGR DEVICE**

(30) Priority: 16.11.2010 JP 2010255801
(71) Applicant: IHI Corporation, Tokyo 135-8710 (JP)
(72) Inventor: KOBAYASHI, Yuji, Tokyo 135-8710 (JP)
(74) Representative: Lamb, Martin John Carstairs
(86) International application number: PCT/JP2011/075711
(87) International publication number: WO 2012/066979

(57) **Abstract**

An axis (45c) of an EGR pipe (45) on an outlet end side three-dimensionally crosses an axis (29c) of an intake pipe (29) so as to create inside the intake pipe (29) a swirl flow of an EGR gas having a swirling component in the same direction as a rotating direction of a compressor impeller (17). The EGR pipe (45) includes an EGP flow restricting portion (53) which is provided with a flow passage area gradually reduced toward the intake pipe (29), in its outlet end side portion. A downstream flow restricting portion (55) is formed at a portion in the intake pipe (29) on an immediately downstream side of a junction with the EGR pipe (45). The downstream flow restriction portion (55) has a flow passage area which becomes gradually smaller toward the compressor (13).

## Description

### [Technical Field]

The present invention relates to a low-pressure loop EGR device (exhaust gas recirculation device) for use in a supercharged engine equipped with a supercharger, which is configured to take an exhaust gas from a portion in an exhaust pipe (an exhaust passage) on a downstream side of a turbine of the supercharger as an EGR gas (exhaust gas recirculation gas) and to put the EGR gas back to a portion in an intake pipe (an intake passage) on an upstream side of a compressor of the supercharger.

### [Background Art]

A high-pressure EGR device takes an EGR gas from a portion in an exhaust passage on an upstream side of a turbine and puts the EGR gas back to a portion in an intake passage on a downstream side of a compressor. In order to reduce NOx (nitrogen oxides) contained in an exhaust gas from a supercharged engine, a low-pressure loop EGR device to replace the high-pressure loop EGR device is under development in recent years (see PTL 1 or PTL 2) from the viewpoint of ensuring a sufficient EGR quantity, and so forth. Such a low-pressure loop EGR device is configured to take an EGR gas from a portion in an exhaust passage on a downstream side of a turbine and to put the EGR gas back to a portion in an intake passage on an upstream side of a compressor.

The low-pressure loop EGR device includes an EGR passage (an EGR pipe). The EGR passage connects the portion in the exhaust passage on the downstream side of the turbine to the portion in the intake passage on the upstream side of the compressor in such a manner as to establish communication, thereby enabling the EGR gas to communicate (flow) between these portions . In addition, an EGR valve is provided midway in the EGR passage. The EGR valve opens and closes the EGR passage. An EGR cooler is provided midway in the EGR passage at a portion closer to the exhaust passage than the EGR valve. The EGR cooler cools the EGR gas.

Accordingly, when the EGR valve opens the EGR passage while the supercharged engine is in operation, part of the exhaust gas in the exhaust passage flows as the EGR gas from the portion in the exhaust passage on the downstream side of the turbine into the EGR passage. The EGR gas flowing into the EGRpassage is once cooled by the EGR cooler, and then flows from the inside of the EGR passage to the portion in the intake passage on the upstream side of the compressor. Thereby, a combustion temperature in the supercharged engine drops and an amount of emission of NOx (nitrogen oxides) decreases as a consequence.

### [Citation List]

### [Patent Literature]

[PTL 1] JP 2004-162552 A
[PTL 2] JP 2005-299615 A

### [Summary of Invention]

Although the EGR gas is cooled by the EGR cooler as described above, the EGR gas still has a very high temperature in comparison with the air introduced into the intake pipe. Accordingly, when the EGR gas flows from the inside of the EGR pipe to the portion in the intake pipe on the upstream side of the compressor and joins the air inside the intake pipe, a region having a high temperature gradient is created at a portion in the intake pipe on an immediately downstream side of a junction with the EGR pipe (on an immediately downstream side of an outlet end of the EGR pipe). For this reason, there is a problem that: condensation of the EGR gas occurs in the intake pipe; and the condensed water introduced into the compressor and the like brings about rusting of the compressor and the like. In addition, there is also a problem that the condensed water is transformed into an acid by NOx, SOx or the like contained in the EGR gas, and causes corrosion of the compressor and the like.

An object of the present invention is to provide a low-pressure loop EGR device that is capable of making it less likely that condensation of an EGR gas which may lead to rusting and corrosion of a compressor and the like occurs.

An aspect of the present invention is a low-pressure loop EGR device to be used in a supercharged engine provided with a supercharger having a compressor, a turbine and a turbine shaft, the compressor provided in an intake pipe, the turbine provided in an exhaust pipe, the turbine shaft connecting a compressor impeller in the compressor and a turbine impeller in the turbine coaxially and integrally with each other, the low-pressure loop EGR device configured to take part of an exhaust gas from a portion in the exhaust pipe on a downstream side of the turbine as an EGR gas and to put the EGR gas back to a portion in the intake pipe on an upstream side of the compressor. The low-pressure loop EGR device comprises: an EGR pipe configured to circulate the EGR gas, the EGR pipe including an inlet end connected to a portion in the exhaust pipe on a downstream side of the turbine so as to communicate thereto, an outlet end connected to a portion in the intake pipe on an upstream side of the compressor so as to communicate thereto, and an EGP flow restricting portion formed on the outlet end side and provided with a flow passage area becoming gradually smaller toward the intake pipe; an EGR valve provided in the EGR pipe and configured to open and close the EGR pipe; and an EGR cooler provided in the EGR pipe and configured to cool the EGR gas, wherein an axis of an opening of the EGR pipe on the outlet end side three-dimensionally crosses an axis of the intake pipe to create inside the intake pipe a swirl flow of the EGR gas having a swirling component in the same direction as a rotating direction of the compressor impeller.

Here, the "upstream side" means an upstream side from the viewpoint of a flow direction of an exhaust gas or air, and the "downstream side" means a downstream side from the viewpoint of the flow direction of the exhaust gas of the air.

The present invention can provide a low-pressure loop EGR device that is capable of making it less likely that condensation of an EGR gas which may lead to rusting and corrosion of a compressor and the like occurs.

### BRIEF DESCRIPTION OF THE DRAWINGS

[Fig. 1] Fig. 1 is a schematic diagram showing a configuration of a supercharged engine equipped with a low-pressure loop EGR device according to an embodiment of the present invention.
[Fig. 2] Fig. 2 is a cross-sectional view showing a principal part of the low-pressure loop EGR device according to the embodiment of the present invention, which is taken along the II-II line in Fig. 1.
[Fig. 3] Fig. 3 is a cross-sectional view showing a principal part of the low-pressure loop EGR device according to the embodiment of the present invention, which is taken along the III-III line in Fig. 2.

### [Brief Description of Drawings]

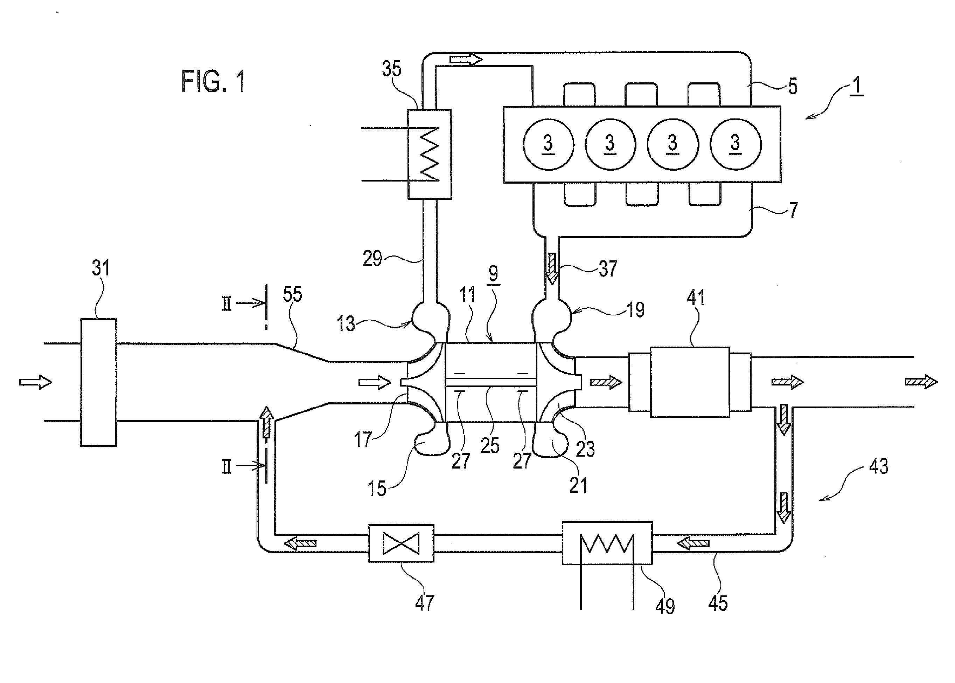

An overall configuration of a supercharged engine (inclusive of an intake system and an exhaust system) according to an embodiment of the present invention, a configuration of a low-pressure loop EGR device according to the embodiment, and so forth will be described below in sequence with reference to Fig. 1 to Fig. 3. In the drawings, hatched arrows indicate the flows of an exhaust gas and an EGR gas while hollow arrows indicate the flows of air (compressed air) and the air containing the EGR gas.

As shown in Fig. 1, a supercharged engine 1 according to the embodiment is an in-line four-cylinder diesel engine, for example. The supercharged engine 1 includes an intake manifold 5 configured to distribute the air (the compressed air) to cylinders 3, and an exhaust manifold 7 configured to collect the exhaust gas from the cylinders 3. In addition, the supercharged engine 1 is equipped with a supercharger 9 configured to supercharge the air to be supplied to the intake manifold 5 by using thermal and pressure energy of the exhaust gas from the exhaust manifold 7. The following is brief description of a configuration of the supercharger 9.

The supercharger 9 includes a base housing (a bearing housing) 11. A compressor 13 configured to compress the air is placed on one side (the left side in Fig. 1) of the base housing 11. The compressor 13 includes: a compressor housing 15 fixed to the one side of the base housing 11; and a compressor impeller 17 rotatably provided in the compressor housing 15. A turbine 19, which is configured to generate rotative force by using the thermal and pressure energy of the exhaust gas, is placed on the other side (the right side in Fig. 1) of the base housing 11. The turbine 19 includes: a turbine housing 21 fixed to the other side of the base housing 11; and a turbine impeller 23 rotatably provided in the turbine housing 21. A turbine shaft (a rotor shaft) 25, which connects the compressor impeller 17 and the turbine impeller 23 coaxially and integrally with each other, is rotatably provided in the base housing 11 with the assistance of bearings 27.

Next, configurations of the intake system and the exhaust system of the supercharged engine 1 will be briefly described.

As shown in Fig. 1, one end of an intake pipe (an intake passage) 29 for feeding the air to the intake manifold 5 is connected to the intake manifold 5 so as to communicate thereto. Meanwhile, an air cleaner 31, which is configured to clean the air introduced into the intake pipe 29, is placed on the other end side of the intake pipe 29. Moreover, the above-described compressor 13 is provided midway in the intake pipe 29 on the downstream side of the air cleaner 31 from the viewpoint of the intake system inclusive of the intake pipe 29. In addition, an intercooler 35 configured to cool the air that is compressed (the compressed air) is provided midway in the intake pipe 29 on the downstream side of the compressor 13.

One end of an exhaust pipe (an exhaust passage) 37 for discharging the exhaust gas is connected to the exhaust manifold 7 so as to communicate thereto. Meanwhile, a particulate filter 41, which is configured to trap particulate materials contained in the exhaust gas, is placed on the other end side of the exhaust pipe 37. Moreover, the above-described turbine 19 is provided midway in the exhaust pipe 37 on the upstream side of the particulate filter 41 from the viewpoint of the exhaust system inclusive of the exhaust pipe 37.

Next, a configuration of a low-pressure loop EGR device (exhaust gas recirculation device) 43 according to the embodiment of the present invention will be described.

As shown in Fig. 1 to Fig. 3, the low-pressure loop EGR device 43 according to the embodiment is expected to be used in the above-described supercharged engine 1. The low-pressure loop EGR device 43 takes part of the exhaust gas from a portion in the exhaust pipe 37 on the downstream side of the turbine 19 as an EGR gas (exhaust gas recirculation gas) and puts the EGR gas back to a portion in the intake pipe 29 on the upstream side of the compressor 13.

The low-pressure loop EGR device 43 includes an EGR pipe (an EGR passage) 45. The EGR pipe 45 connects the portion in the exhaust pipe 37 on the downstream side of the turbine 19 to the portion in the intake pipe 29 on the upstream side of the compressor 13 so as to communicate thereto, thereby enabling the EGR gas to communicate (flow) between these portions. Specifically, an inlet end (a start end) of the EGR pipe 45 is connected to the portion in the exhaust pipe 37 on the downstream side of the turbine 19 so as to communicate thereto. In the meantime, an outlet end (a terminal end) of the EGR pipe 45 is connected to the portion in the intake pipe 29 on the upstream side of the compressor 13 so as to communicate thereto. An inside diameter of the EGR pipe 45 (i.e. , a diameter of an inner wall of the EGR pipe 45) may be smaller than an inside radius of the intake pipe 29 (i.e., a radius of an inner wall of the intake pipe 29) at a junction with the EGR pipe 45.

An EGR valve 47 is provided midway in the EGR pipe 45. The EGR valve 47 opens and closes the EGR pipe 45, and thereby adjusts a flow rate of the EGR gas in the EGR pipe 45. Further, an EGR cooler 49 configured to cool the EGR gas is provided midway in the EGR pipe 45 at a portion closer to the exhaust pipe 37 than the EGR valve 47.

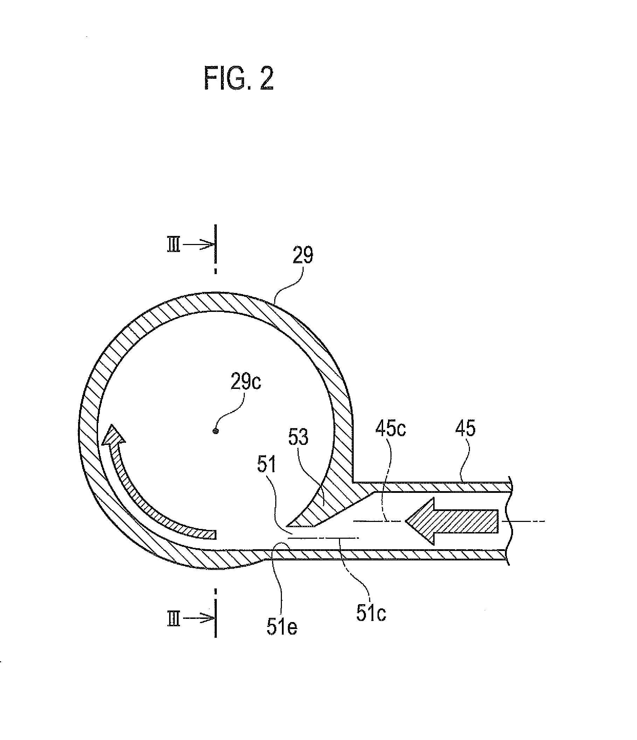

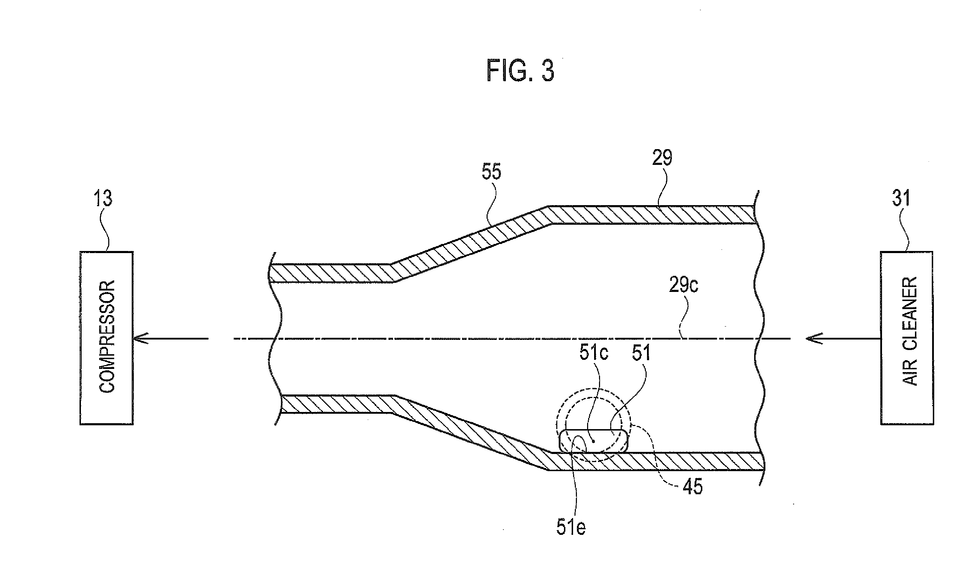

The EGR pipe 45 includes an EGR flow restricting portion 53 formed at the outlet end thereof. The EGR flow restricting portion 53 has a variable flow passage area (a flow passage cross-sectional area) which becomes gradually smaller toward the intake pipe 29. Accordingly, a cross-sectional area (an opening area) of an opening (a communication hole) 51 of the EGR pipe 45 communicating with the inside of the intake pipe 29 is smaller than a cross-sectional area of a portion of the EGR pipe 45 where the EGR flow restricting portion 53 is not provided. Meanwhile, as shown in Fig. 2, an axis 51c of the opening 51 is eccentric with respect to an axis (a center line) 29c of the intake pipe 29. Here, a rim 51e of the opening 51 may be smoothly joined to an inner peripheral surface of the intake pipe 29. Although Fig. 3 illustrates the opening 51 that is formed in a rectangular shape, the shape of the opening 51 is not limited by this drawing.

The opening 51 is connected to the intake pipe 29 so as to create inside the intake pipe 29 a swirl flow of the EGR gas having a swirling component in the same direction as a rotating direction of the compressor impeller 17. In other words, the axis 51c of the opening 51 three-dimensionally crosses the axis 29c of the intake pipe 29 for the purpose of obtaining the above-mentioned swirl flow. In the meantime, when the inside diameter of the EGR pipe 45 is smaller than the inside radius of the intake pipe 29 at the junction with the EGR pipe 45, an axis 45c of the EGR pipe 45 may also three-dimensionally cross the axis 29c of the intake pipe 29. In other words, a direction of extension of the opening 51 may be oriented to a position deviated from the axis 29c of the intake pipe 29 and a direction of extension of the EGR pipe 45 at the outlet end side may also be oriented to a position deviated from the axis 29c of the intake pipe 29.

A downstream flow restricting portion 55 is formed at a portion in the intake pipe 29 on an immediately downstream side of the junction with the EGR pipe 45 (a portion in the intake pipe 29 on an immediately downstream side of the opening 51 of the EGR pipe 45). The downstream flow restricting portion 55 has a variable flow passage area which becomes gradually smaller toward the compressor 13.

Next, operation and effect of the embodiment of the present invention will be described.

The exhaust gas from the surcharged engine 1 in operation makes the exhaust gas from the exhaust manifold 7 flow into the turbine housing 21 via the exhaust pipe 37. The exhaust gas flowing into the turbine housing 21 generates rotative force (a rotary torque) by use of the thermal and pressure energy of the exhaust gas. The rotative force rotates the turbine impeller 23 and also rotates the compressor impeller 17 by means of the turbine shaft 25. In other words, the turbine impeller 23 and the compressor impeller 17 integrally rotate by means of the turbine shaft 31[A1] that connects these impellers. Thereby, it is possible to compress the air taken into the compressor housing 15 via the intake pipe 29 and to supercharge (compress) the compressed air (the air) to be supplied to the intake manifold 5. Here, the compressed air is cooled by the intercooler 35 before supplied to the intake manifold 5.

In addition, while the supercharged engine 1 is in operation, the EGR valve 47 opens the EGR pipe 45 and thereby adjusts the flow rate of the EGR gas in the EGR pipe 45. As a result of the operation of the EGR valve 47, part of the exhaust gas in the exhaust pipe 37 flows as the EGR gas from the portion in the exhaust pipe 37 on the downstream side of the turbine 19 (in other words, the portion in the exhaust pipe 37 on the downstream side of the particulate filter 41) into the EGR pipe 45. Then, the EGR gas flowing into the EGR pipe 45 is once cooled by the EGR cooler 49 and then flows from the inside of the EGR pipe 45 to the portion in the intake pipe 29 on the upstream side of the compressor 13 (in other words, the portion in the intake pipe 29 between the compressor 13 and the air cleaner 31). In short, in this embodiment, the EGR gas can be taken out of the portion in the exhaust pipe 37 on the downstream side of the turbine 19 and be put back to the portion in the intake pipe 29 on the upstream side of the compressor 13 while the supercharged engine 1 is in operation. Thus, it is possible to lower a combustion temperature in the supercharged engine 1 and to reduce an amount of emission of NOx.

Moreover, the opening 51 is connected to the intake pipe 29 in such a way that the axis 51c of the opening 51 three-dimensionally crosses the axis 29c of the intake pipe 29. In addition, the EGR flow restricting portion 53 is formed at the outlet end of the EGR pipe 45. As a consequence, when the EGR gas flows from the inside of the EGR pipe 45 to the portion in the intake pipe 29 on the upstream side of the compressor 13, it is possible to create inside the intake pipe 29 the swirl flow of the EGR gas having the swirling component in the same direction as the rotating direction of the compressor impeller 17 while increasing a flow velocity of the EGR gas. In the meantime, the formation of the downstream flow restriction portion 55 makes it possible to sufficiently ensure a swirl velocity of the EGR gas (a swirl velocity of the swirl flow of the EGR gas). Thereby, it is possible to promote a mixing action of the EGR gas and the air without adversely affecting an intake performance of the compressor 13, and to eliminate a region having a high temperature gradient by making more homogeneous a state of temperature distribution at the portion in the intake pipe 29 on the immediately downstream side of the junction with the EGR pipe 45.

Thus, the embodiment of the present invention can make the condensation of the EGR gas less likely to occur in the intake pipe 29 while maintaining the performances of the compressor 13, and sufficiently prevent the compressor 13, the intercooler 35, and the like from rusting and corrosion.

The present invention is not limited only to the above-described embodiment but can also be realized in other various aspects. The scope of the right to be encompassed by the present invention is not limited only to the above-described embodiment.

## Claims

1. A low-pressure loop EGR device to be used in a supercharged engine provided with a supercharger having a compressor, a turbine and a turbine shaft, the compressor provided in an intake pipe, the turbine provided in an exhaust pipe, the turbine shaft connecting a compressor impeller in the compressor and a turbine impeller in the turbine coaxially and integrally with each other, the low-pressure loop EGR device configured to take part of an exhaust gas from a portion in the exhaust pipe on a downstream side of the turbine as an EGR gas and to put the EGR gas back to a portion in the intake pipe on an upstream side of the compressor, the low-pressure loop EGR device comprising:
an EGR pipe configured to circulate the EGR gas, the EGR pipe including an inlet end connected to a portion in the exhaust pipe on a downstream side of the turbine so as to communicate thereto, an outlet end connected to a portion in the intake pipe on an upstream side of the compressor so as to communicate thereto, and an EGP flow restricting portion formed on the outlet end side and provided with a flow passage area becoming gradually smaller toward the intake pipe;
an EGR valve provided in the EGR pipe and configured to open and close the EGR pipe; and
an EGR cooler provided in the EGR pipe and configured to cool the EGR gas, wherein
an axis of an opening of the EGR pipe on the outlet end side three-dimensionally crosses an axis of the intake pipe to create inside the intake pipe a swirl flow of the EGR gas having a swirling component in the same direction as a rotating direction of the compressor impeller.

2. The low-pressure loop EGR device according to claim 1, wherein a downstream flow restricting portion having a flow passage area becoming gradually smaller toward the compressor is formed at a portion in the intake pipe on an immediately downstream side of a junction with the EGR pipe.

3. The low-pressure loop EGR device according to claim 1, wherein a dimension of an inside diameter of the EGR pipe is smaller than an inside radius of the intake pipe at the junction with the EGR pipe.

4. The low-pressure loop EGR device according to claim 2, wherein a dimension of an inside diameter of the EGR pipe is smaller than an inside radius of the intake pipe at the junction with the EGR pipe.
